# EUROPEAN PATENT APPLICATION

(11) **EP 4 566 768 A1**
(43) Date of publication of application: **11.06.2025**
(21) Application number: 22955085.0
(22) Date of filing: 11.08.2022
(51) Int. Cl.: B25J 11/00, B25J 5/00, B25J 9/00, B65G 15/44

(54) **TRANSPORT ROBOT**

(71) Applicant: LG Electronics Inc., Yeongdeungpo-gu Seoul 07336 (KR)
(72) Inventor: LEE, Haklim, Seoul 06772 (KR)
(74) Representative: Schornack, Oliver
(86) International application number: PCT/KR2022/012035
(87) International publication number: WO 2024/034710

(57) **Abstract**

**Abstract:** This transport robot comprises: a loading area; an unloading opening formed at one side of the loading area; a conveyor which is positioned at the lower portion of the loading area, and which conveys, to the unloading opening, items loaded into the loading area; and a door module for covering the unloading opening, wherein the door module slides upward or downward so as to open the unloading opening, and the transport robot can automatically unload the loaded items and thus can complete transport even in unmanned conditions.

## Description

### [Technical Field]

Embodiments of the present disclosure relate to a robot for transporting one or more articles to a destination and a method for operating the same.

### [Background]

To take charge of a portion of factory automation, robots have been developed for industrial use. Recently, the application range of robots has been further expanded, and robots that can be used in daily life as well as medical robots and aerospace robots are being developed.

Among industrial robots, robots that perform precise assembly work repeatedly perform the same operations and repeat the operations without encountering unexpected situations at a predetermined position, so that automation using the robots has been proceeded.

However, a transportation area including a traveling area (i.e., a driving area) where occurrence or non-occurrence of unexpected situations can be determined, has not yet been actively commercialized with robots. However, recently, as performance of sensors that recognize the surroundings has improved and computer technology that can quickly process the recognized information has evolved, the number of driving robots has rapidly increased.

Industrially, robots that are in charge of transportation functions have attracted attention and competition in robot technology is intensifying day by day. In addition to robots that transport bulky or large articles, there is a growing need for robots that perform services to transport small articles to destinations.

However, conventional goods transportation has difficulty in unloading loaded articles from a loading space to a destination. Since costs are increased when using an arm-shaped device like a person's arm, research on cheaper and more stable unloading methods capable of unloading articles is being actively conducted.

### [Summary]

### [Technical Problem]

The present disclosure is to provide a transport robot in which a door module is opened upward or downward such that a loaded article is safely unloaded.

### [Technical Solutions]

Provided is a transport robot including a loading area, an unloading opening defined at one side of the loading area, a conveyor that is positioned at a lower portion of the loading area and transfers an article loaded in the loading area to the unloading opening, and a door module covering the unloading opening, wherein the door module opens the unloading opening by sliding upward or downward.

At least a portion of the door module may be located on top of the loading area when the door module is opened upward.

The door module may form an unloading slope extending from the unloading opening when opened downward.

The door module may include a plurality of rolling bars arranged side by side in a slide movement direction, and a curvature of the door module may be changed as an angle between the plurality of rolling bars is changed.

The transport robot may further include rolling motors positioned at upper and lower portions of the unloading opening and rotatable, and
each sprocket coupled to each rolling motor to rotate and having a plurality of teeth formed at an outer side thereof, and each rolling bar may include a tooth groove defined in a direction of an inner surface of the door module and having a shape corresponding to a shape of the tooth of the sprocket.

The rolling motors may include an upper rolling motor positioned at the upper portion of the unloading opening and a lower rolling motor positioned at the lower portion of the unloading opening, the door module may be in contact with both the sprocket of the upper rolling motor and the sprocket of the lower rolling motor when closed, the door module may be in contact with the sprocket of the upper rolling motor when opened upward, and the door module may be in contact with the sprocket of the lower rolling motor when opened downward.

Each rolling bar may include a side portion facing a neighboring rolling bar, the side portion may include a connecting portion connected to the neighboring rolling bar, an outer contact portion located in a direction of an outer surface of the door module with respect to the connecting portion, and an inner contact portion located in a direction of an inner surface of the door module with respect to the connecting portion, and the outer contact portion may protrude more than the inner contact portion.

The door module may have a curvature of protruding in an outward direction greater than a curvature of protruding in an inward direction, and the door module may form an unloading slope extending from the unloading opening when opened downward.

The transport robot may further include a guide rail including grooves where two ends of each rolling bar are inserted, respectively, and the guide rail may include a vertical portion positioned in a lateral direction of the unloading opening.

The guide rail may include a horizontal portion positioned on top of the loading area, and a first curved portion connecting the vertical portion with the horizontal portion, and the door module may pass through the first curved portion from the vertical portion and move to the horizontal portion when opened upward, so that at least a portion thereof is positioned on top of the loading area.

The guide rail may include an inclined portion obliquely extending downward from a lower portion of the vertical portion, and the door module may form an unloading slope extending from the unloading opening when opened downward.

The inclined portion may have an angle equal to or greater than 90° and equal to or smaller than 120° relative to the vertical portion.

The guide rail may include a horizontal portion positioned on top of the loading area, a first curved portion connecting the vertical portion with the horizontal portion, an inclined portion obliquely extending downward from a lower portion of the vertical portion, and a second curved portion positioned between the inclined portion and the vertical portion, and a curvature of the second curved portion may be smaller than a curvature of the first curved portion.

The transport robot may further include bearings coupled to the two ends of the rolling bar and positioned in the grooves of the guide rail, respectively, wherein the bearings rotate when the door module slides.

### [Advantageous Effects]

The transport robot of the present disclosure may automatically unload the loaded article, thereby automatically completing not only the transport but also the unloading.

In addition, the additional space is not required in the unloading opening to open the door module, so that the transport robot may be used in the narrow space.

In addition, because the door module may function as the slope without the separate slope, the door module may be used for various purposes.

In addition, the loaded article may be safely unloaded, thereby preventing the article from overturning or being damaged by falling.

Effects obtainable from the present embodiments are not limited by the above mentioned effects, and other unmentioned effects can be clearly understood from the above description by those having ordinary skill in the technical field to which the present disclosure pertains.

### [Brief Description of the Drawings]

FIG. 1 is a diagram illustrating a cloud system based on a 5G network according to an embodiment of the present disclosure.
FIG. 2 is a block diagram illustrating appearance of a transport robot according to an embodiment of the present disclosure.
FIG. 3 is a perspective view illustrating a transport robot according to an embodiment of the present disclosure.
FIG. 4 is a view illustrating docking of a transport robot according to an embodiment of the present disclosure with a courier box.
FIG. 5 is a rear perspective view illustrating a state in which a door module of a transport robot according to an embodiment of the present disclosure is closed.
FIG. 6 is a rear perspective view illustrating a state in which a door module of a transport robot according to an embodiment of the present disclosure is opened upward.
FIG. 7 is a rear perspective view illustrating a state in which a door module of a transport robot according to an embodiment of the present disclosure is opened downward.
FIG. 8 is a view illustrating rollers and a guide rail for operating a door module of the present disclosure.
FIG. 9 shows cross-sectional views taken along lines A-A and B-B in FIG. 8.
FIG. 10 is a side cross-sectional view of a transport robot according to an embodiment of the present disclosure.
FIG. 11 is a view illustrating a detailed structure of a door module of a transport robot according to an embodiment of the present disclosure.
FIG. 12 is a view illustrating a bending angle of a door module of a transport robot according to an embodiment of the present disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element may be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

A robot is a machine device capable of automatically performing a certain task or operation. The robot may be controlled by an external control device or may be embedded in the control device. The robot may perform tasks that are difficult for humans to perform, such as repeatedly processing only a preset operation, lifting a heavy object, performing precise tasks or a hard task in extreme environments.

In order to perform such tasks, the robot includes a driver such as an actuator or a motor, so that the robot may perform various physical operations, such as moving a robot joint.

Industrial robots or medical robots having a specialized appearance for specific tasks due to problems such as high manufacturing costs and dexterity of robot manipulation were the first to be developed.

Whereas industrial and medical robots are configured to repeatedly perform the same operation in a designated place, mobile robots have recently been developed and introduced to the market. Robots for use in the aerospace industry may perform exploration tasks or the like on distant planets that are difficult for humans to directly go to, and such robots have a driving function.

In order to perform the driving function, the robot has a driver, wheel(s), a frame, a brake, a caster, a motor, etc. In order for the robot to recognize the presence or absence of surrounding obstacles and move while avoiding the surrounding obstacles, an evolved robot equipped with artificial intelligence has recently been developed.

Artificial intelligence refers to a technical field for researching artificial intelligence or a methodology for implementing the artificial intelligence. Machine learning refers to a technical field for defining various problems handled in the artificial intelligence field and for researching methodologies required for addressing such problems. Machine learning is also defined as an algorithm that improves performance of a certain task through continuous experience.

An artificial neural network (ANN) is a model used in machine learning, and may refer to an overall model having problem solving ability, which is composed of artificial neurons (nodes) that form a network by a combination of synapses. The artificial neural network (ANN) may be defined by a connection pattern between neurons of different layers, a learning process of updating model parameters, and an activation function of generating an output value.

The artificial neural network (ANN) may include an input layer and an output layer, and may optionally include one or more hidden layers. Each layer includes one or more neurons, and the artificial neural network (ANN) may include a synapse that interconnects neurons and other neurons.

In the artificial neural network (ANN), each neuron may output a function value of an activation function with respect to input signals received through synapses, weights, and deflection.

A model parameter may refer to a parameter determined through learning, and may include the weight for synapse connection and the deflection of neurons. In addition, the hyperparameter refers to a parameter that should be set before learning in a machine learning algorithm, and includes a learning rate, the number of repetitions, a mini-batch size, an initialization function, and the like.

The purpose of training the artificial neural network (ANN) may be seen as determining model parameters that minimize a loss function according to the purpose of the robot or the field of use of the robot. The loss function may be used as an index for determining an optimal model parameter in a learning process of the artificial neural network (ANN).

Machine learning may be classified into supervised learning, unsupervised learning, and reinforcement learning according to learning methods.

Supervised learning refers to a method for training the artificial neural network (ANN) in a state where a label for learned data is given. Here, the label may refer to a correct answer (or a resultant value) that should be inferred by the artificial neural network (ANN) when the learned data is input to the artificial neural network (ANN). Unsupervised learning may refer to a method for training the artificial neural network (ANN) in a state where a label for learned data is not given. Reinforcement learning may refer to a learning method in which an agent defined in the certain environment learns to select an action or sequence of actions that may maximize cumulative compensation in each state.

Among artificial neural networks, machine learning implemented as a deep neural network (DNN) including a plurality of hidden layers is also referred to as deep learning, and deep learning is a part of machine learning. Hereinafter, machine learning is used in a sense including deep learning.

Artificial intelligence (AI) technology is applied to the robot, so that the robot may be implemented as a guide robot, a transportation robot, a cleaning robot, a wearable robot, an entertainment robot, a pet robot, and an unmanned aerial robot, etc.

The robot may include a robot control module for controlling operation thereof, and the robot control module may refer to a software module or a chip implemented in hardware.

By means of sensor information obtained from various types of sensors, the robot may acquire state information of the robot, may detect (recognize) the surrounding environment and the object, may generate map data, may determine a travel route and a travel plan, may determine a response to user interaction, or may determine a necessary operation.

The robot may perform the above-described operations using a learning model composed of at least one artificial neural network (ANN). For example, the robot may recognize the surrounding environment and object using a learning model, and may determine a necessary operation using the recognized surrounding environment information or object information. Here, the learning model may be directly learned from the robot or learned from an external device such as an AI server.

In this case, whereas the robot may perform a necessary operation by directly generating a result using the learning model, the robot may also perform an operation by transmitting sensor information to an external device such as an AI server and receiving the resultant information generated thereby.

The robot may perform autonomous driving through artificial intelligence. Autonomous driving refers to a technique in which a movable object such as a robot may autonomously determine an optimal path by itself and may move while avoiding collision with an obstacle. The autonomous driving technique currently being applied may include a technique in which the movable object (e.g., a robot) may travel while maintaining a current driving lane, a technique in which the movable object may travel while automatically adjusting a driving speed such as adaptive cruise control, a technique in which the movable object may automatically travel along a predetermined route, and a driving technique in which, after a destination is decided, a route to the destination is automatically set.

In order to perform autonomous driving, the movable object such as the robot may include a large number of sensors to recognize data of the surrounding situation. For example, the sensors may include a proximity sensor, an illumination sensor, an acceleration sensor, a magnetic sensor, a gyro sensor, an inertial sensor, an RGB sensor, an infrared (IR) sensor, a fingerprint recognition sensor, an ultrasonic sensor, an optical sensor, a microphone, a lidar, a radar, and the like.

The robot may perform autonomous driving not only based on information collected by sensors, but also based on image information collected by an RGBC camera and an infrared (IR) camera and sound information collected through a microphone. In addition, the robot may travel based on information received through a user input unit. Map data, location information, and information about peripheral situations may be collected through a wireless communication unit. The collected information is requisite for autonomous driving.

Map data may include object identification information for various objects disposed in a space where the robot moves. For example, the map data may include object identification information for fixed objects such as a wall and a door, and other object identification information for movable objects such as a flowerpot and a desk. In addition, the object identification information may include a name, a type, a distance, a location, etc.

Therefore, the robot may essentially include sensors, various input units, a wireless communication unit, and the like to collect data that may be learned by artificial intelligence, and may perform optimal operations by synthesizing various types of information. The learning processor for performing artificial intelligence may perform learning by being mounted in a controller embedded in the robot, may transmit the collected information to a server, may perform learning through the server, and may retransmit the learned result to the robot, so that the robot may perform autonomous driving based on the learned result.

A robot equipped with artificial intelligence may collect the surrounding information even in a new place to implement the entire map, and a large amount of information about a place of the major activity zone may be accumulated, so that the robot may perform more accurate autonomous driving.

The robot may include a touchscreen or a button to receive a user input, and may receive a command by recognizing a user's voice. In order to convert a voice input signal into a character string, the processor may obtain information about the intention corresponding to the user input using at least one of a speech to text (STT) engine for converting a voice input into a character string and a natural language processing (NLP) engine for obtaining information about the intention of natural language.

In this case, at least one of the STT engine and the NLP engine may include an artificial neural network (ANN) trained by a machine learning algorithm. In addition, at least one of the STT engine and the NLP engine may be trained by the learning processor, may be trained by the learning processor of the AI server, or may be trained by distributed processing of the trained results.

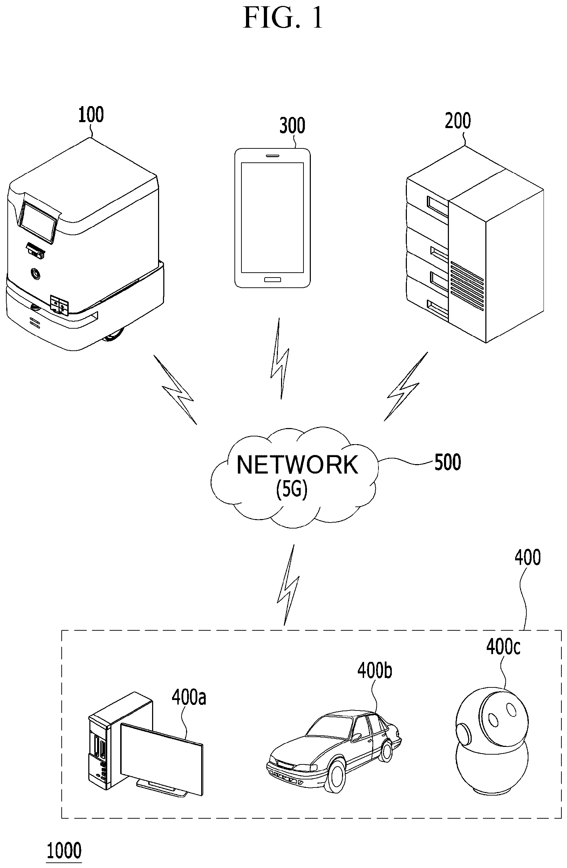

FIG. 1 is a diagram illustrating a cloud system 1000 based on a 5G network according to an embodiment of the present disclosure.

Referring to FIG. 1, the cloud system 1000 may include a transport robot 100, a mobile terminal 300, a robot control system 200, various devices 400, and a 5G network 500.

The transport robot 100 is a robot that transports goods (articles) from a departure point to a destination. The transport robot 100 can move directly from a logistics center to a destination. Alternatively, after the transport robot is loaded on a vehicle at the logistics center and is then delivered to the vicinity of the destination by the vehicle, the transport robot is unloaded from the vehicle and then moves to the destination.

In addition, the transport robot 100 may move articles to the destination not only outdoors but also indoors. The transport robot 100 can be implemented as an AGV, and the AGV may be a transport device that moves by a sensor, a magnetic field, a vision device, etc. on the floor.

The transport robot 100 may include a storage area for storing articles therein, the storage area may be divided into a plurality of partial storage areas to load various articles, and various types of articles may be placed in the partial storage areas. Accordingly, mixing of articles can be prevented.

The mobile terminal 300 may communicate with the transport robot 100 via the 5G network 500. The mobile terminal 300 may be a device carried by a user who installs a partition in the storage area to load articles, or may be a device carried by a recipient of the loaded articles. The mobile terminal 300 may provide information based on images, and the mobile terminal 300 may include mobile devices such as a mobile phone, a smartphone, a wearable device (e.g., a watch-type terminal, a glass-type terminal, an HMD).

The robot control system 200 may remotely control the transport robot 100 and respond to various requests of the transport robot 100. For example, the robot control system 200 may perform calculations using artificial intelligence (AI) based on the request from the transport robot 100.

In addition, the robot control system 200 may determine a movement path of the transport robot 100. When there is a plurality of destinations, the robot control system 200 may determine the order of the destinations when there are multiple destinations.

The various devices 400 may include a personal computer (PC) 400a, an autonomous vehicle 400b, a home robot 400c, etc. When the transport robot 100 arrives at the transport destination of the articles, the transport robot 100 can directly deliver the articles to the home robot 400c through communication with the home robot 400c.

The various devices 400 may be connected to the transport robot 100, the mobile terminal 300, the robot control system 200, etc., via the 5G network 500 by wire or wirelessly.

The transport robot 100, the mobile terminal 300, the robot control system 200, and various devices 400 are all equipped with 5G modules to transmit and receive data at a rate of 100 Mbps to 20 Gbps (or higher), so that large video files can be transmitted to various devices, and power consumption can be minimized by operating at low power. However, the transfer rate may be implemented differently depending on the embodiments.

The 5G network 500 may include a 5G mobile communication network, a short-range network, the Internet, etc., and may provide a communication environment for devices by wire or wirelessly.

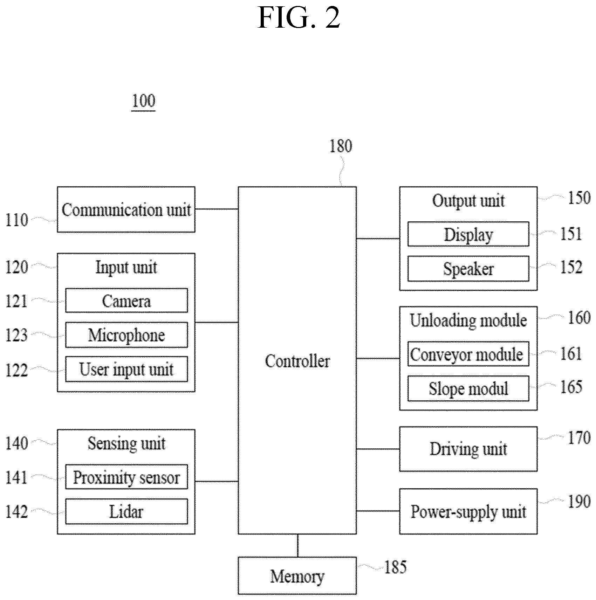

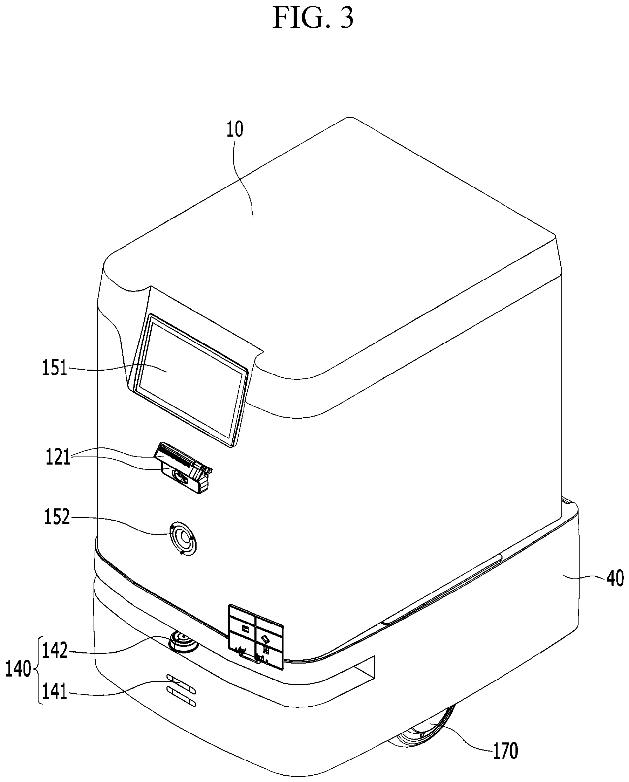

FIG. 2 is a block diagram illustrating appearance of the transport robot 100 according to an embodiment of the present disclosure. The transport robot 100 according to an embodiment of the present disclosure will be described with reference to FIGS. 3 to 5.

Referring to FIG. 2, the transport robot 100 may include a body including a storage area 50, and constituent components to be described later may be included in the body. The transport robot 100 may include a communication unit 110, an input unit 120, a sensor unit 140, an output unit 150, a memory 185, a wheel driving unit 170, a controller 180, and a power-supply unit 190. The constituent components shown in FIG. 2 are not always required to implement the transport robot 100, such that it should be noted that the transport robot 100 according to the present disclosure may include more or fewer components than the elements listed above.

The communication unit 110 may include a wired or wireless communication module capable of communicating with the robot control system 200.

As an optional embodiment, the communication unit 110 may be equipped with modules for GSM, CDMA, LTE, 5G, WLAN, Wi-Fi, Bluetooth, RFID, infrared communication (IrDA), ZigBee, and NFC communication.

The input unit 120 may include a user input unit 122 for receiving information from a user. As an optional embodiment, the input unit 120 may include a camera 121 for inputting an image signal, and a microphone 123 (hereinafter referred to as a "microphone") for receiving an audio signal. Here, the camera 121 or the microphone 123 may be treated as a sensor, and a signal acquired from the camera 121 or the microphone 123 may be referred to as sensing data or sensor information.

The input unit 120 may acquire input data to be used when acquiring output data using learning data and a learning model for model learning. The input unit 120 may obtain unprocessed input data. In this case, the controller 180 may extract input feature points as preprocessing for the input data.

The camera 121 may be located in front to detect obstacles in front, and as shown in FIG. 3, a plurality of cameras 121 may be arranged to be different in angle. In more detail, the plurality of cameras 121 may have different capture directions, such as a camera for widely recognizing a front-view area and a camera for capturing a floor.

Alternatively, cameras with different functions may be provided. For example, a wide-angle camera, an infrared (IR) camera, etc. may be provided. The camera may serve as a sensor unit 140 for detecting surrounding objects.

The user input unit 122 may be provided with a touch panel overlapping with a button or a display 151. Alternatively, a user command may be input remotely through the communication unit 110. In this case, the user input unit 122 may include a PC 400 or a remote control device separately provided from the transport robot 100.

Since the user input unit 122 includes all methods capable of receiving user commands, the user input unit 122 can recognize user commands through voice recognition. That is, a voice recognition device that analyzes voice collected from the microphone 123 and extracts user commands can also serve as the user input unit 122.

The input unit 120 may include an article information input unit, and the article information input unit may receive information about the article's size, information about the article's weight, destination information, information about a transport requester, etc. At this time, the article information input unit may include a code reader.

The sensor unit 140 may obtain at least one of internal information of the transport robot 100, surrounding environment information of the transport robot 100, and user information using various sensors.

At this time, the sensor unit 140 may include various types of sensors for recognizing the surroundings for autonomous driving. Representative examples may include a distance detection sensor or a proximity sensor 141 and a Lidar 141.

The proximity sensor 141 may include an ultrasonic sensor that recognizes nearby objects and determines the distance to the objects based on the time taken for emitted ultrasonic waves to return. A plurality of proximity sensors may be provided along the circumference, and may also be provided on an upper side to detect obstacles located on the upper side.

The Lidar 142 is a device that precisely expresses exterior appearances of the surroundings by emitting laser pulses and receiving the light that is reflected from the surrounding objects. The operation principle of the Lidar 142 is similar to that of a radar, but different electromagnetic waves are used in the Lidar 142 and the radar, so that the Lidar 142 and the radar are designed to use different technologies and different utilization ranges.

Lasers may damage human eyesight because they use light with a wavelength of 600 to 1000 nm. The Lidar 142 uses a longer wavelength than the lasers, and is used to measure not only the distance to a target object, but also a moving speed and direction, temperature, surrounding atmospheric material analysis, a concentration measurement, and the like.

In addition, the sensor unit 140 may include an illumination sensor, an acceleration sensor, a magnetic sensor, a gyro sensor, an inertial sensor, an RGB sensor, an infrared (IR) sensor, a fingerprint recognition sensor, an ultrasonic sensor, a light sensor, an optical sensor, etc.

The output unit 150 may generate various output signals related to visual, auditory and/or tactile sensations. The output unit 150 may include an optical output unit that outputs visual information, a display 151, etc. The output unit 150 may include a speaker 152 for outputting auditory information, an ultrasonic output unit for outputting ultrasonic signals belonging to an inaudible frequency, etc., and a haptic module for outputting tactile information.

The memory 185 may store data that supports various functions of the transport robot 100. The memory 185 may store not only a plurality of application programs (or applications) driven by the transport robot 100, but also data and commands required to operate the transport robot 100.

In addition, the memory 185 may store information required to perform operations using artificial intelligence, machine learning, and artificial neural networks. The memory 185 may store a deep neural network model. The deep neural network model may be used to infer a result value for new input data rather than learning data, and the inferred value may be used as a basis of determination required to perform a certain operation.

The power-supply unit 190 may receive external power or internal power under control of the controller 180, such that the power-supply unit 190 may supply the received power to the constituent components included in the transport robot 100. The power-supply unit 190 may include, for example, a battery. The battery 191 may be implemented as an embedded battery or a replaceable battery. The battery may be charged by a wired or wireless charging method, and the wireless charging method may include a magnetic induction method or a magnetic resonance method.

The driving unit 170 is a means for moving the transport robot 100, may include wheels or legs, and may include a wheel driving unit and a leg driving unit for controlling the wheels or legs. A plurality of wheels provided on the bottom surface of the wheel driving unit may be controlled to move the transport robot 100 including the body. The wheels may include a main wheel 171 for fast driving, a caster 173 for changing the direction to another direction, and an auxiliary caster for stable driving so that the loaded articles (L) do not fall during driving.

The leg driving unit (not show) may control multiple legs according to control of the controller 180, and may thus move the body. The plurality of legs may correspond to a configuration formed so that the transport robot 100 can walk or run. The plurality of legs may be implemented as four legs, but the scope of the present disclosure is not limited thereto. The plurality of legs may be coupled to the body to be integrally formed, and may be implemented to be detachably coupled to the body.

The transport robot 100 may move the body through the driving unit 170 having at least one of the wheel driving unit and/or the leg driving unit. However, in this specification, an example in which the wheel driving unit is mounted on the transport robot 100 will be mainly described.

The controller 180 is a module that controls the configurations of the transport robot 100. The controller 180 may refer to a data processing device embedded in hardware that has a physically structured circuit to perform a function expressed by code or commands included in a program. As an example of the data processing device embedded in hardware, this exemplary data processing device may include processing devices such as a microprocessor, a central processing unit (CPU), a processor core, a multiprocessor, an ASIC, and an FPGA, but the scope of the present disclosure is not limited thereto.

The transport robot 100 may include a loading area 50 in the main body, and the loading area 50 may include a sidewall or cover 10 for preventing the articles from falling off from the loading area 50. Referring to FIG. 3, the transport port 10 is illustrated as having the cover 10, but another form in which only a sidewall other than the top surface of the transport port 10 is provided is also possible.

Although there is no separate layer distinction in the loading area 50 as shown in the drawing, the loading area 50 is composed of a plurality of layers, and multiple objects can be loaded while being distributed into respective layers. After unloading the lower articles (L), the upper articles can be moved to the lower layer to unload additional objects.

The controller 180 may collect at least one of the number of articles (L) to be placed in the loading area 50, weight information of the articles (L), size information of the articles (L), delivery order information of the articles (L), and security level information of the articles (L). For example, the controller 180 may collect the above information through the input unit 120. The input of the input unit 120 may also include a touch input on the display.

Based on the collected information, the controller 180 may transmit information on the articles (L) loaded in the loading area 50 to the mobile terminal 200 (see FIG. 1) through the communication unit 110.

The transport robot 100 may include an unloading module 160 for unloading the articles (L) loaded in the loading area 50. The unloading module 160 may include a conveyor 161 constituting the lower part of the loading area 50. The conveyor 161 may include a conveyor belt 1611 that moves in a first direction where an unloading exit is located, a roller 1612 for driving the conveyor belt 1611, and a motor (not shared).

According to the present embodiment, the conveyor 161 may be configured to cover the entire floor surface of the loading area 50, but if the size of the transport robot 100 is large, the conveyor 161 may be formed in a part of the loading area 50. In this case, a plurality of articles (L) may be loaded, and a pusher (not shown) may be further included to push the articles (L) loaded in an area other than the conveyor 161 to the conveyor 161.

A door module 165 that opens and closes an unloading opening 55 may be included. Because the article may fall via the unloading opening 55, the door module 165 is required. The door module 165 of the present disclosure may be converted into a slope along which an article L may stably move from the conveyor 161 to a floor as well as simply opening and closing the unloading opening 55. Specific shape and operation related to the door module 165 will be described later.

Hereinafter, the unloading module 160 including the door module 165 of the transport robot 100 will be described in detail with reference to the drawings. FIG. 3 is a perspective view of the transport robot 100 according to an embodiment of the present disclosure.

Referring to FIG. 3, an upper structure 10 in which a loading space 50 is defined and a lower structure 40 in which the driving unit 170, the power-supply unit 190, the controller 180, and the like are mounted may be included. To load the article L in a box shape, the transport robot 100 may have a hexahedral shape as shown in FIG. 3, but the present disclosure may not be necessarily limited thereto. The transport robot 100 may include a cover constituting an outer appearance thereof, and the cover may protect the internal components and the loading area from the outside.

The transport robot 100 is moveable in various directions, but a surface thereof that is directed in a main travel direction is called a front surface, and a surface thereof that is directed in an opposite direction is called a rear surface. The camera 121, the Lidar 142, the proximity sensor 141, and the like may be disposed on the front surface of the transport robot 100, and the display 151 having a touch panel functioning as an output unit and a user input unit may be located on the front surface of the transport robot 100.

As an opening for unloading the article L, the unloading opening 55 may be located in the rear surface of the transport robot 100. Because the components for traveling are disposed on the front surface, it is easy to define the unloading opening 55 having a sufficient size in the rear surface.

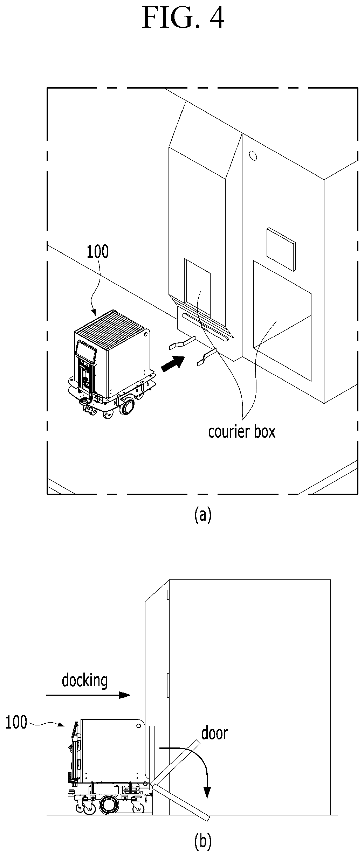

FIG. 4 is a view illustrating docking of the transport robot 100 according to an embodiment of the present disclosure with a courier box. As shown (a) in FIG. 4, the transport robot 100 may move such that the unloading opening 55 of the transport robot 100 is in contact (docks) with an entrance of the courier box.

The entrance of the courier box may be located at a predetermined vertical level from the floor surface (a left courier box), or may be located adjacent to the floor (a right courier box). When the vertical level of the entrance of the courier box is similar to a vertical level of the loading area 50, that is, a vertical level of the unloading opening 55, the conveyor 161 of the loading area may be operated to move the article to the courier box.

When the entrance of the courier box is located adjacent to the floor, the article may fall from the unloading opening 55 to the floor, so that the slope for stable unloading is required. The slope may be implemented using the door module 165 as shown in (b) in FIG. 4. As the door module 165 is opened, the slope extending from a lower portion of the unloading opening 55 may be implemented.

However, the door module having a shape opened via hinge pivoting in a downward direction has a problem of being caught at the entrance of the courier box as shown in (b) in FIG. 4. When the vertical level of the courier box is similar to that of the unloading opening 55, the separate slope is not required, so that rather, the door module 165 opened downward and constituting the slope as shown in (b) in FIG. 4 is not able to be used.

Accordingly, the transport robot 100 of the present disclosure may include the door module 165 that is slidably opened upward or downward based on the entrance of the courier box at various vertical levels.

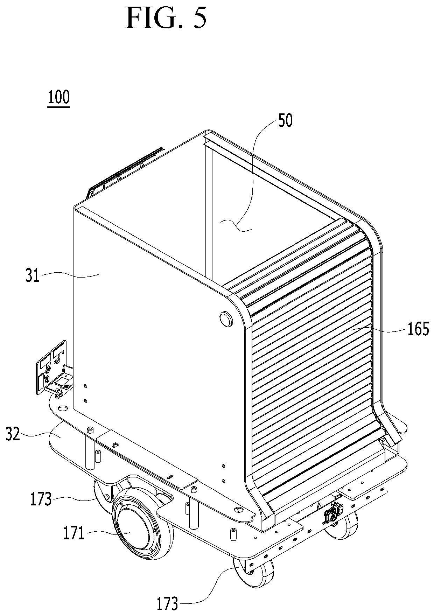

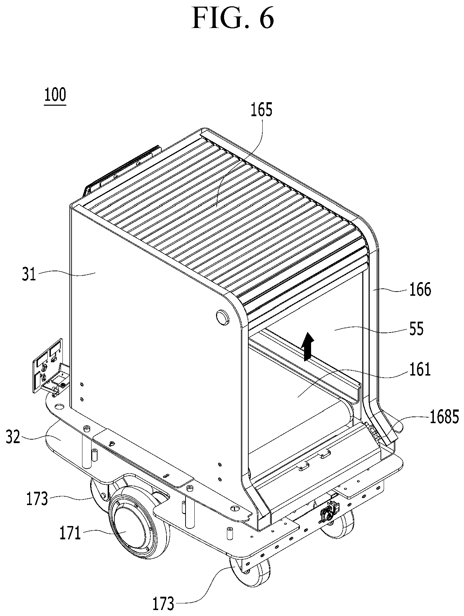

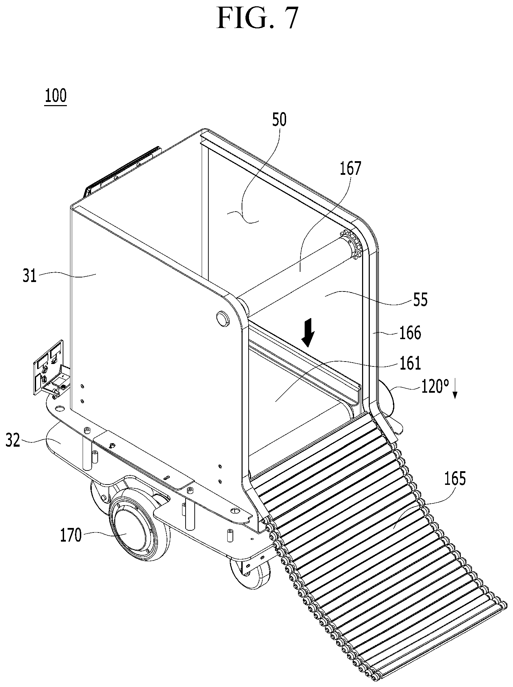

FIG. 5 is a rear perspective view illustrating a state in which the door module 165 of the transport robot 100 according to an embodiment of the present disclosure is closed. FIG. 6 is a rear perspective view illustrating a state in which the door module 165 of the transport robot 100 according to an embodiment of the present disclosure is opened upward, and FIG. 7 is a rear perspective view illustrating a state in which the door module 165 of the transport robot 100 according to an embodiment of the present disclosure is opened downward.

FIGS. 5 to 7 are shown such that the internal components are exposed in a form in which the cover constituting the outer appearance is removed.

The lower structure of the transport robot 100 may include a lower frame 32, the driving unit 170 located beneath the lower frame 32, the controller located on the lower frame 32, and the power-supply unit. Most of the components of the transport robot 100 are mounted on the lower structure, so that a center of gravity may be located at a lower portion.

The upper structure of the transport robot 100 may include the conveyor 161 positioned on the lower structure, and the loading area 50 in which the conveyor 161 constitutes a bottom surface may be included. An upper frame 31 surrounding the loading area 50 may be included, and the upper frame 31 may surround a front surface and side surfaces of the loading area 50.

The unloading opening 55 may be located in a rear surface of the upper loading area 50, and the door module 165 covering the unloading opening 55 may cover an open rear surface of the upper frame 31. For convenience of description, in the state of FIG. 5, a surface facing the loading area 50 is referred to as an inner surface of the door and a surface facing outside is referred to as an outer surface.

The door module 165 of the present disclosure may slide upward to open the unloading opening 55 as illustrated in FIG. 6. Because the door module 165 is opened and closed in the slide type rather than the hinge type, a space 100 to open and close the door module 165 is not required at the rear of the transport robot. After docking the unloading opening 55 directly with the entrance of the courier box and then opening the door module 165 upward as shown in FIG. 6, the conveyor 161 may be operated to unload the article.

The door module 165 is disposed in a vertical direction in the state of covering the unloading opening 55 as shown in FIG. 5, but is disposed in a horizontal direction while covering an upper portion of the loading area in the state of being opened upward as shown in FIG. 6.

The door module 165 may form a curved surface between the unloading opening 55 and a top surface of the loading area, that is, at an upper edge of the unloading opening 55 to switch from the closed state in FIG. 5 to the open state in FIG. 6.

Further, as shown in FIG. 7, the door module 165 may move downward to open the unloading opening 55. The door module 165 moved downward may form the slope obliquely forming an inclined surface from the unloading opening 55. The door module 165 may be bent while forming the curved surface when sliding downward.

The door module 165 of the present disclosure freely changes in direction as shown in FIGS. 5 to 7, and passes through a curved section when the state thereof changes. The door module 165 of the present disclosure may have a flexible shape capable of bending deformation in the slide movement direction so as to form both a flat surface and the curved surface.

When the door module 165 is opened only in the upward direction as shown in FIG. 5 to FIG. 6, a load is not loaded on the door module 165, and thus a great rigidity is not required. However, when the door module 165 moves downward of the unloading opening 55 and forms the slope for unloading the article as shown in FIG. 7, rigidity capable of supporting a weight of the article is required.

To implement the door module 165 having the flexibility and the rigidity, the door module 165 of the present disclosure may be formed in a shape of a rolling hinge in which a plurality of rolling bars 1651 are sequentially arranged in the slide movement direction. The rolling bar 1651 may include a metal material having rigidity such as SUS.

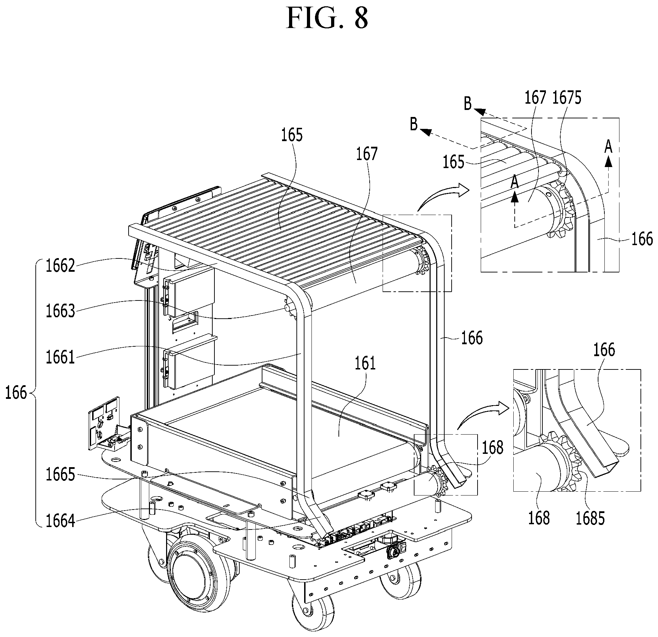

FIG. 8 is a view illustrating rolling motors 167 and 168 and a guide rail 166 for operating the door module 165 of the present disclosure. A state in which the upper frame 31 and a portion of the door module 165 are omitted is illustrated such that the structure is more clearly identified.

The rolling motors 167 and 168 that provide power for the sliding movement of the door module 165 may be included. The rolling motors 167 and 168 may be positioned at upper and lower portions of the unloading opening 55, respectively, and the rolling motors 167 and 168 may provide a rotational force.

Sprockets 1675 and 1685 that rotate by receiving the rotational force of the rolling motors 167 and 168 are connected to the rolling motors 167 and 168, respectively. The sprockets 1675 and 1685, as disk-shaped members having teeth formed on outer circumferential surfaces thereof, may be fastened to the rolling bars 1651 of the door to slide the rolling bars 1651.

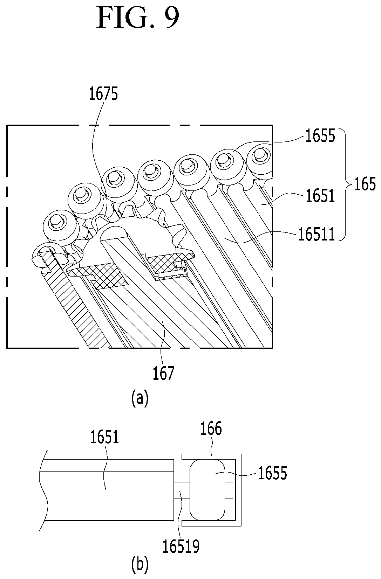

FIG. 9 shows cross-sectional views taken along lines A-A and B-B in FIG. 8. As shown in (a) in FIG. 9, a lower portion of the rolling bar 1651 may include a tooth groove 16511 into which the teeth of the sprockets 1675 and 1685 are inserted.

The tooth groove 16511 may be elongated along an extending direction of the rolling bar 1651 as shown in FIG. 9, or may be defined only at an end where the sprockets 1675 and 1685 are located.

The tooth groove 16511 does not necessarily have a shape matching a shape of the sprockets 1675 and 1685, but may be defined to correspond to a teeth spacing of the sprockets 1675 and 1685.

The lower rolling motor 168 located at the lower portion also has a shape similar to that of the upper rolling motor 167 located at the upper portion, and is coupled with the sprocket 1685 to be engaged with the tooth groove 16511 of the rolling bar 1651.

The upper rolling motor 167 is in charge of the operation of opening the door module 165 upward from the closed state and the operation of closing the door module 165 (FIG. 5<->FIG. 6). The lower rolling motor 168 is in charge of opening the door module 165 downward and closing the door module 165 (FIG. 5 <-> FIG. 7).

The rolling motors 167 and 168 provide a driving force for the sliding movement, but may further include the guide rail 166 to guide the door module 165 to move to an accurate location.

As shown in (b) in FIG. 9, the guide rail 166 may include grooves recessed in a U-shape such that both ends of the rolling bar 1651 are inserted thereinto, and may be positioned to face both ends of the door module 165 in a direction perpendicular to the sliding direction.

The guide rail 166 may include a vertical portion 1661 positioned at both sides of the unloading opening 55, a horizontal portion 1662 positioned at the top of the loading area 50, and a first curved portion 1663 connecting the vertical portion 1661 with the horizontal portion 1662.

In addition, an inclined portion 1664 extending obliquely from a lower portion of the vertical portion may be included such that the door module 165 is disposed to be inclined at a predetermined inclination instead of falling in the vertical direction during the downward movement.

The inclined portion 1664 may be bent forward to have an angle in a range of about 90° to 120° inclusive with the vertical portion 1661. When the angle with the vertical portion 1661 is equal to or greater than 120°, the inclined portion 1664 may have at least a portion of the unloading slope forming an angle equal to or greater than 40°, so that the article to be unloaded may be overturned.

A section between the vertical portion 1661 and the inclined portion 1664 may also include a second curved portion 1665 that is bent while forming a curve. The second curved portion 1665 may have a smaller curvature than the first curved portion 1663.

A bearing 1655 coupled to an end 16519 of the rolling bar 1651 may be further disposed to minimize a frictional force between the guide rail 166 and the rolling bar 1651. The bearing 1655 may have a wheel shape, and may rotate and move in the guide rail 166 when the rolling bar 1651 slides.

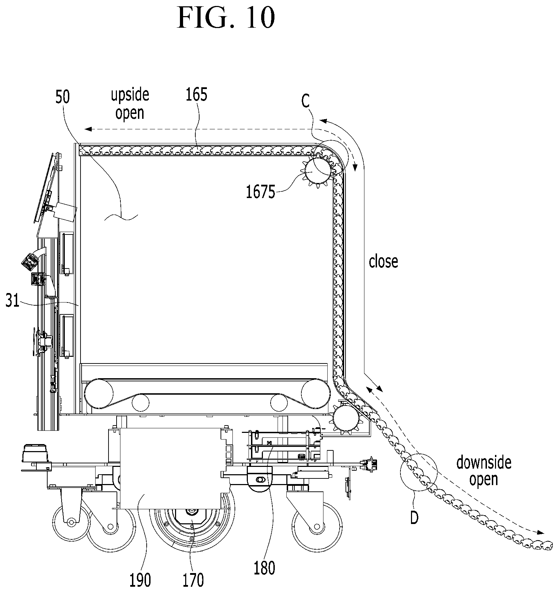

FIG. 10 is a side cross-sectional view of the transport robot 100 according to an embodiment of the present disclosure. All states in which the door module 165 may be disposed are illustrated by ignoring an actual length of the door module 165. The door module 165 is in a state of being coupled to at least one of the sprocket 1675 of the upper rolling motor 167 and the sprocket 1685 of the lower rolling motor 168.

That is, in the closed state, an upper portion of the door module 165 may be fastened to the upper sprocket 1675 and a lower portion thereof may be fastened to the lower sprocket 1685, so that the door module 165 may move in both the upward and downward directions.

In the upwardly open state, the door module 165 is spaced apart from the lower sprocket 1685, but is maintained in the state of being fastened to the upper sprocket 1675. On the contrary, when the door module 165 moves downward and is in the downwardly open state, the door module 165 may maintain a state in which an upper end thereof is coupled to the lower sprocket 1685.

The door module 165 may include the curved section because the opening and closing direction changes. As shown in C of an upward opening section in FIG. 10, the curved section may be bent to protrude convexly in an outward direction of the door module 165, and as shown in D of a downward opening section, the curved section may protrude convexly in an inward direction of the door module 165.

When the door module 165 opens downward, the door module 165 should form the slope connected from the unloading opening. In this regard, when the door module 165 is too bent, the door module 165 moved downward may not form a gentle inclined surface, but may fall vertically from the lower portion of the unloading opening and be bent while forming a great curvature at a portion in contact with the floor.

Even when the section C has a great curvature, because the door module 165 is located on the guide rail during the upward opening, a location of the door module 165 does not change differently from design, so that the curvature of the curved surface protruding in the outward direction of the door module 165 may be great.

However, on the contrary, when the curvature of the curved surface of the door module 165 protruding in the inward direction is great, the unloading slope may not be established as described above, and thus the bending deformation of protruding inward of the door module 165 should be achieved in a limited manner.

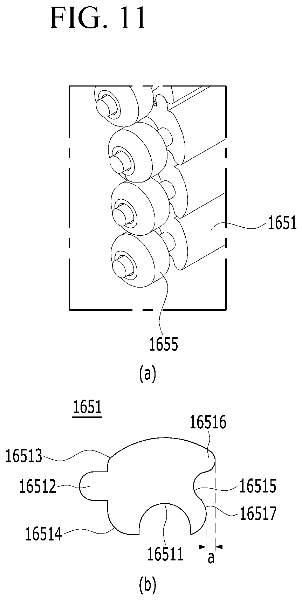

FIG. 11 is a view illustrating a detailed structure of the door module 165 of the transport robot 100 according to an embodiment of the present disclosure. As shown in FIG. 11, in the door module 165 of the present disclosure, the plurality of rolling bars 1651 are pin-coupled to each other to be rotatable.

For the pin coupling, a connecting portion 16512 and 16515 composed of a hinge pin 16512 protruding in a direction of a neighboring rolling bar 1651 and a hinge hole 16515 to which the hinge pin 16512 is coupled may be included.

Because the rolling bar 1651 is rotatable around the hinge pin 16512, an angle between a pair of neighboring rolling bars 1651 may be changed. However, portions 16513, 16514, 16516, and 16517 located inward and outward (a left side and a right side based on (b) in FIG. 11) of the connecting portion 16512 and 16515 are in contact with the neighboring rolling bar 1651.

Portions of the door module 165 positioned outward of the connecting portion 16512 and 16515 are referred to as outer contact portions 16513 and 16516, and conversely, contact portions positioned inward of the connecting portion 16512 and 16515 are referred to as inner contact portions 16514 and 16517.

Because the connecting portion 16512 and 16515 is composed of the hinge pin 16512 and the hinge hole 16515 located at both sides in the slide direction of the rolling bar 1651, a pair of outer contact portions 16513 and 16516 and a pair of inner contact portions 16514 and 16517 may also be equipped.

In the outer contact portions 16513 and 16516, an outer contact portion positioned toward the hinge pin 16512 is referred to as a first outer contact portion 16513 and an outer contact portion positioned toward the hinge hole 16515 is referred to as a second outer contact portion 16516. Further, in the inner contact portions 16514 and 16517, an inner contact portion positioned toward the hinge pin 16512 is referred to as a first inner contact portion 16514 and an inner contact portion positioned toward the hinge hole 1655 is referred to as a second inner contact portion 16517.

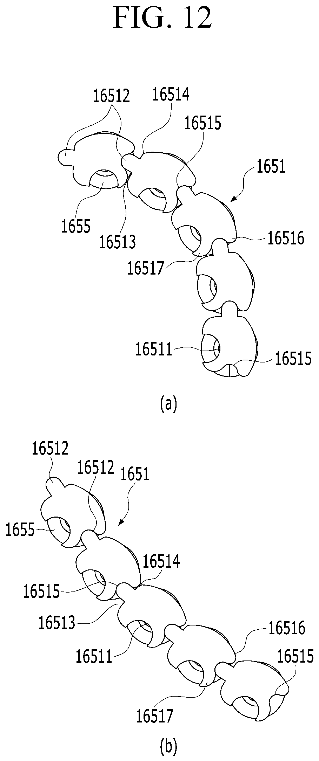

FIG. 12 is a view illustrating a bending angle of the door module 165 of the transport robot 100 according to an embodiment of the present disclosure, and is an enlarged view of the portions C and D in FIG. 10.

As shown in (a) in FIG. 12, when the door module 165 is bent to be convex in the outward direction to the maximum, the first inner contact portion 16514 of the rolling bar 1651 comes into contact with the second inner contact portion 16517 of the neighboring rolling bar 1651, and the first outer contact portion 16513 is spaced apart from the second outer contact portion 16516 of the neighboring rolling bar 1651.

On the contrary, when the door module 165 is bent to be convex in the inward direction to the maximum as shown in (b) in FIG. 12, the first outer contact portion 16513 of the rolling bar 1651 comes into contact with the second outer contact portion 16516 of the neighboring rolling bar 1651, and the first inner contact portion 16514 is spaced apart from the second inner contact portion 16517 of the neighboring rolling bar 1651.

Therefore, a range of the bending deformation of the door module 165 may vary based on a degree of protrusion of the contact portions 16513, 16514, 16516, and 16517. Referring to (b) in FIG. 11, degrees of protrusion of the first outer contact portion 16513 and the first inner contact portion 16514 are similar to each other, but there is a difference 'a' in the degree of protrusion between the second outer contact portion 16516 and the second inner contact portion 16517.

As the second outer contact portion 16516 protrudes more than the second inner contact portion 16517, an angle of the bending deformation in the outward direction (deformation forming a curved surface protruding in the inward direction) as shown in (b) in FIG. 12 becomes smaller.

The first outer contact portion 16513, instead of the second outer contact portion 16516, may protrude more than the first inner contact portion 16514. A spacing between the first outer contact portion 16513 and the second outer contact portion 16516 of the neighboring rolling bar 1651 determines a maximum curvature of the bending deformation of convexly bending maximally in the inward direction of the door module 165.

A spacing between the first inner contact portion 16514 and the second inner contact portion 16517 of the neighboring rolling bar 1651 determines a maximum curvature of the bending deformation of convexly bending maximally in the inward direction of the door module 165.

Accordingly, to allow the spacing between the outer contact portions 16513 and 16516 to be smaller than the spacing between the inner contact portions 16514 and 16517, one of the outer contact portions 16513 and 16516 may protrude more than the inner contact portions 16514 and 16517, and a curvature when the door module 165 is bent to be convex in the inward direction may be smaller than a curvature when the door module is bent to be convex in the outward direction.

Because the maximum curvature of the door module 1665 varies based on the direction of the bending deformation, a curvature of the first curved portion 1663 of the guide rail 166 may be greater than that of the second curved portion 1665.

Based on the structures of the contact portions 16513, 16514, 16516, and 16517 of the rolling bar 1651 as such, the door module 165 may extend downward while forming a gentle angle as in the portion D in FIG. 10, and the door module 165 may form a gentle inclined surface extending from the lower end of the unloading opening 55.

As described above, the transport robot 100 of the present disclosure may automatically unload the loaded article L, thereby completing the transport even in an environment where there is no person after the transport.

In addition, an additional space is not required in the unloading opening 55 to open the door module 165, so that the transport robot 100 may be used in a narrow space.

In addition, because the door module 165 may function as the slope without the separate slope, the door module 165 may be used for various purposes.

In addition, the loaded article L may be safely unloaded, thereby preventing the article L from overturning or being damaged by falling. The above detailed description is not to be construed as limiting in any respect and should be considered exemplary. The scope of the disclosure is to be determined by a reasonable interpretation of the appended claims, and all changes within the equivalents of the disclosure are included in the scope of the disclosure.

## Claims

1. A transport robot comprising:
a loading area;
an unloading opening defined at one side of the loading area;
a conveyor positioned at a lower portion of the loading area and configured to transfer an article loaded in the loading area to the unloading opening; and
a door module covering the unloading opening,
wherein the door module opens the unloading opening by sliding upward or downward.

2. The transport robot of claim 1, wherein at least a portion of the door module is located on top of the loading area when the door module is opened upward.

3. The transport robot of claim 1, wherein the door module forms an unloading slope extending from the unloading opening when opened downward.

4. The transport robot of claim 1, wherein the door module includes a plurality of rolling bars arranged side by side in a slide movement direction,
wherein a curvature of the door module is changed as an angle between the plurality of rolling bars is changed.

5. The transport robot of claim 4, further comprising:
rolling motors positioned at upper and lower portions of the unloading opening and rotatable; and
each sprocket coupled to each rolling motor to rotate and having a plurality of teeth formed at an outer side thereof,
wherein each rolling bar includes a tooth groove defined in a direction of an inner surface of the door module and having a shape corresponding to a shape of the tooth of the sprocket.

6. The transport robot of claim 5, wherein the rolling motors include an upper rolling motor positioned at the upper portion of the unloading opening and a lower rolling motor positioned at the lower portion of the unloading opening,
wherein the door module is in contact with both the sprocket of the upper rolling motor and the sprocket of the lower rolling motor when closed,
wherein the door module is in contact with the sprocket of the upper rolling motor when opened upward,
wherein the door module is in contact with the sprocket of the lower rolling motor when opened downward.

7. The transport robot of claim 4, wherein each rolling bar includes a side portion facing a neighboring rolling bar,
wherein the side portion includes:
a connecting portion connected to the neighboring rolling bar;
an outer contact portion located in a direction of an outer surface of the door module with respect to the connecting portion; and
an inner contact portion located in a direction of an inner surface of the door module with respect to the connecting portion,
wherein the outer contact portion protrudes more than the inner contact portion.

8. The transport robot of claim 7, wherein the door module has a curvature of protruding in an outward direction greater than a curvature of protruding in an inward direction,
wherein the door module forms an unloading slope extending from the unloading opening when opened downward.

9. The transport robot of claim 4, further comprising a guide rail including grooves where two ends of each rolling bar are inserted, respectively,
wherein the guide rail includes a vertical portion positioned in a lateral direction of the unloading opening.

10. The transport robot of claim 9, wherein the guide rail includes:
a horizontal portion positioned on top of the loading area; and
a first curved portion connecting the vertical portion with the horizontal portion,
wherein the door module passes through the first curved portion from the vertical portion and moves to the horizontal portion when opened upward, so that at least a portion thereof is positioned on top of the loading area.

11. The transport robot of claim 9, wherein the guide rail includes an inclined portion obliquely extending downward from a lower portion of the vertical portion,
wherein the door module forms an unloading slope extending from the unloading opening when opened downward.

12. The transport robot of claim 11, wherein the inclined portion has an angle equal to or greater than 90° and equal to or smaller than 120° relative to the vertical portion.

13. The transport robot of claim 9, wherein the guide rail includes:
a horizontal portion positioned on top of the loading area;
a first curved portion connecting the vertical portion with the horizontal portion;
an inclined portion obliquely extending downward from a lower portion of the vertical portion; and
a second curved portion positioned between the inclined portion and the vertical portion,
wherein a curvature of the second curved portion is smaller than a curvature of the first curved portion.

14. The transport robot of claim 9, further comprising bearings coupled to the two ends of the rolling bar and positioned in the grooves of the guide rail, respectively, wherein the bearings rotate when the door module slides.
